# EUROPÄISCHE PATENTSCHRIFT

(11) **EP 1 497 812 B1**
(45) Veröffentlichungstag und Bekanntmachung des Hinweises auf die Patenterteilung: **22.03.2006**
(21) Anmeldenummer: 03722357.5
(22) Anmeldetag: 27.03.2003
(51) Int. Cl.: G09F 27/00

(54) **INFORMATIONSTRAEGERNNUTZUNGSSYSTEM IN KOMMERZIELL GENUTZTEN ANLAGEN**
SYSTEM FOR UTILIZING INFORMATION CARRIERS IN COMMERCIALLY USED FACILITIES
SYSTEME D'UTILISATION DE SUPPORTS D'INFORMATIONS DANS DES INSTALLATIONS UTILISEES A DES FINS COMMERCIALES

(30) Priorität: 23.04.2002 DE 10218168; 27.04.2002 DE 10218967
(43) Veröffentlichungstag der Anmeldung: 19.01.2005
(73) Patentinhaber: Smart Point Media AG, 50996 Köln (DE)
(72) Erfinder: KRATZENBERG, Wolfgang, 34270 Schauenburg (DE); STEIN, Siegfried, 34246 Vellmar (DE)
(74) Vertreter: Schön, Theodor
(86) Internationale Anmeldenummer: PCT/EP2003/003162
(87) Internationale Veröffentlichungsnummer: WO 2003/091974

(56) Entgegenhaltungen:
- DE-A- 4 033 054
- DE-A- 10 028 980
- DE-A- 19 935 537
- FR-A- 2 719 931
- US-A1- 2002 005 775

## Beschreibung

Die Erfindung bezieht sich auf ein System zur Nutzung von Informationsträgern in kommerziell genutzten Anlagen, beispielsweise Verkaufsmärkte oder Freizeitanlagen und dergl., mit einer Vielzahl über untereinander verbundene Gänge erreichbaren Warendarbietungen und eventuell Restaurants oder dergl. Versorgungseinrichtungen sowie einer Anzahl mehr oder minder zentral angeordneter Bezahlkassen sowie einer Wegweisung durch Informationstafeln und ferner einer Ausstattung mit schriftliche, bildliche und/oder akustische Werbebotschaften vermittelnden Informationsträgern, wobei den Besuchern Transportwagen oder sonstige Transportmittel zur Beförderung ihrer Einkäufe und/oder sonstiger Gegenstände zumindest innerhalb der kommerziell genutzten Anlage angeboten werden.

In von einem Publikum begehbaren Anlagen, in welchem dem Publikum Waren oder Dienstleistungen bzw. auch Versorgungsleistungen angeboten werden sind herkömmlicherweise Informationsträger vorhanden, mittels derer das Publikum auf besondere Angebote oder Dienstleistungen hingewiesen wird. Die einfachste Form solcher Informationsträger sind Hinweistafeln, Plakate und dergl. statische Anzeigen mehr. Nachteilig an dieser Art von Informationsträgern ist der Umstand, daß sie nur mit einem verhältnismäßig großen Aufwand an unterschiedliche Waren sowie auch an momentane und insbesondere vorübergehende Situationen, wie Sonderangebote oder dergl. anpassbar sind.
Darüber hinaus gibt es kaum Möglichkeiten die Werbewirksamkeit solcher statischer Informationsträger zu erfassen bzw. überhaupt zu überblicken.
Vor allem in Verkaufsstätten mit einem sehr großen Angebot unterschiedlichster Waren, beispielsweise in Supermärkten ist man daher zumindest teilweise dazu übergegangen auf die jeweiligen Lagerstätten von zu bewerbenden Waren oder Sonderangeboten mit einfachen Hinweisschildern, z.B. farbigen Pfeilen und dergl., aufmerksam zu machen, was den Vorteil, zum einen einer Wiederverwendbarkeit der Hinweisschilder und zum anderen deren leichter, wenig arbeitsaufwendiger Umsetzbarkeit mit sich bringt.
Ferner ist insbesondere für Supermärkte, Einkaufszentren sowie gegebenenfalls Freizeitparks auch bereits vorgeschlagen worden anstelle umsetzbarer Hinweisschilder Leuchttafeln mit variablem Text oder Bild einzusetzen, wobei die Leuchttafeln jeweils individuell oder von einer zentralen Stelle der Anlage aus aktiviert und gegebenenfalls sogar abwechselnd aufeinanderfolgend mit einem bestimmten Text oder Bild versehen werden können. Solcherart gestaltete Informationsträgersysteme sind zwar nunmehr mit einem geringen Aufwand nahezu jeden beliebigen Anwendungsfall anpassbar, sprechen aber, wie auch die einfachen statischen Anzeigen wahllos sämtliche in den Sichtbereich des Informationsträgers gelangende Personen an, so daß es nicht selten vorkommt daß ein und derselben Person immer wieder das gleiche Bild gezeigt wird.

Aus der DE-OS 199 35 537 ist es beispielsweise bekannt alle Einkaufswagen eines Warenhauses so zu gestalten, daß sie Werbebotschaften an den jeweiligen Benutzer übermotteln können, wozu alle Einkaufswagen mit einem Nahbereichsempfänger, einem Lautsprecher und /oder einem Anzeigedisplay sowie einer die Ausgabe von Anzeigen steuernder Elektronik und schließlich einer Akkumulatoreinrichtung zur Stromversortgung ausgerüstet sein müssen.

Weiterhin ist aus der DE-OS 100 28 980 ein Verfahren zur Leitung von Kunden in Einkaufszentren bekannt, welches sich dadurch auszeichnet, daß zur Vorbereitung eines Einkaufes vom Kunden eine Anzahl von Kaufwünschen in eine Datenspeichereinrichtung eingegeben werden müssen, und bei dem der Kunde naschfolgend mittels eines Displays am Einkaufswagen nur zu den vorher programmierten Waren geführt wird.
Schließlich ist aus der US-OS 2002 0005775 eine Kunden-Informationseinrichtung für Selbstbedienungsläden bekannt, welche sich im Besonderen dadurch auszeichnet, daß eine Kunde eines Selbstbedienungsladens im Eingangsbereich des Ladens vermittels einer Eingabeeinrichtung am Einkaufswagen seine Kaufwünsche einer im Selbstbedienungsladen fest installierten, elektronischen Kundenführungseinrichtung übermittelt und die Kundenführungseinrichtung dann den Kunden auf den Standort oder Lagerort der gewünschten Waren aufmerksam macht, wenn der vom Kunden geschobene Einkaufswagen den Standort einer der vom Kunden bereits am Eingang zu den Verkaufsräumen als gewünscht eingegebenen Waren passiert.

Der Erfindung liegt daher die Aufgabe zugrunde ein System zur Nutzung von Informationsträgern in kommerziell genutzten Anlagen, beispielsweise Einkaufszentren, Supermärkte oder aber auch Freizeitanlagen und dergl., zu schaffen, welches es gestattet die Nachteile der bekannten Systeme zu vermeiden und darüber hinaus jede Person des Publikums, die eines der bereitgestellten Transportmittel mit sich führt innerhalb einer Anlage als Individuum anzusprechen.

Diese Aufgabe wird erfindungsgemäß im Wesentlichen dadurch gelöst, daß über die Grundfläche der kommerziell genutzten Anlage hin verteilt eine Vielzahl von Informationsträger angeordnet ist, welchen jeweils neben einer Ansteuerung zur Ausgabe einer Standartanzeige eine Einrichtung zur Ansteuerung zur Ausgabe wenigstens einer, vorzugsweise einer Anzahl unterschiedlicher werkanzeigen oder Informationsanzeigen zugeordnet und wobei die Ansteuerung der Informati- onsträgern durch Signalgeber umschaltbar ist, welche jeweils ein für einen bestimmten Transportwagen oder ein sonstiges bestimmtes Transportmittel charakteristisches Signal abgeben. Damit wird jeder einen Transportwagen oder ein sonstiges in der jeweiligen Anlage bereitgestelltes Transportmittel benutzender Person eine für elektronische Erkennungssysteme unverwechselbare Identität zugeordnet, mit der Folge, daß die Nutzung der verschiedenen innerhalb der Anlage vorhandenen Informationsträger auf die jeweilige Identität abgestellt werden kann, beispielsweise dahingehend, daß dem Individuum niemals ungeplant, d.h. ohne Vorbestimmung, die gleiche Information zwei-oder mehrmals vermittelt wird, wie dies bei allen bekannten jeweils lediglich einen Bereich einer Anlage versorgenden Informationsträgern notwendigerweise der Fall ist.
Im Interesse einer möglichst optimalen Nutzbarkeit der einzelnen Informationsträger, welche beispielsweise durch Bildschirme, Großdiplays oder Beamer in Verbindung mit speziellen Glasscheiben oder andere ansteuerbare Einrichtungen zu bildlichen, schriftlichen und/oder akustischen Darstellungen gebildet sein können, sind den innerhalb der Grundfläche einer kommerziell genutzten Anlage überhaupt vorhandenen ein-und ausschaltbaren bzw. ansteuerbaren Informationsträgern eine in Abhängigkeit von einer wählbaren Größe steuerbare Einschaltzeiten zugeordnet.

In einer bevorzugten Verwirklichungsform kann jeder der Informationsträger mit einer vorgegebenen Standartanzeige, möglicherweise als Wegweiser ausgestattet sein und jede der ein-und ausschaltbaren, von der Standartanzeige abweichenden Anzeigen bezogen auf einen bestimmten Signalgeber lediglich einmal über diesen mobilen Signalgeber aktivierbar bzw. ansteuerbar sein, so daß der jeweils als Individuum behandelten Person jede ansteuerbarer Anzeige lediglich einmal oder in beliebiger Häufigkeit und/oder Zuordnung gezeigt wird.

In einer zweckmäßigen Ausgestaltungsform des Informationsträgernutzungssystems ist vorgesehen, daß an den in der kommerziell genutzten Anlage für die Besucher bereitgehaltenen Transportwagen oder sonstigen Transportmittels, beispielsweise Einkaufskörben oder dergl., codierte Signale ausgebende Mittel, insbesondere abfragbare Transponder, angeordnet sind, welche jeweils ein für exakt diesen jeweiligen Wagen oder dieses jeweilige sonstige Transportmittel charakteristisches Signal abgeben und vorzugsweise dem Ansteuern einer von einer Standartanzeige abweichenden Anzeige zugeordnet sind. Insbesondere kann hierbei im Einzelnen vorgesehen sein, daß sämtliche Informationsträger zumindest mit einer zur Abfrage der codierten Daten der einzelnen Transponder geeigneten Einrichtung, insbesondere einer Sender-/Emfängeranlage, ausgestattet sind, wobei den Sender-/Empfängeranlagen mittel-oder unmittelbar jeweils wenigstens eine Zähleinrichtung zur Erfassung und Speicherung der Anzahl der Aktivierungssignale pro Zeiteinheit nachgeschaltet ist. Insbesondere ist es von sonstigen Weiterbildungen des System vorteilhaft, wenn vorgesehen ist, daß den Sender-/Empfängeranlagen zusätzlich zu einer Zähleinrichtung eine Zeittakteinrichtung nachgeschaltet ist, welche bei Erkennen eines statischen Aktivierungssignales für eine bestimmte Werbebotschaft bzw. Anzeige deren Wiederholung entweder unterbindet oder aber auf vorgebbare insbesondere Intervalle begrenzt. Im Weiteren ist jeder von einer Standartanzeige abweichenden Anzeige eines Informationsträgers eine begrenzte Einschaltzeit bzw. Aktivitätszeit zugeordnet.
Zur Nutzung des Systems entsprechend vorgebbarer Regeln, beispielsweise der Regel, daß der jeweils durch die Sender-/Emfängeranlage als Individuum erkannten Person jede aktivierbare Anzeige oder Botschaft lediglich einmal oder geplant oft gezeigt wird ist es ferner vorteilhaft, der Sender-/Empfängeranlage jedes Informationsträgers eine Einrichtung zugeordnet ist, welche verhindert, daß zumindest während einer der Laufzeit einer durch einen ersten Signalgeber angesteuerten Anzeige diese durch weitere in den Sendebereich der Sender-/Empfängeranlage gelangende Signalgeber nochmals aktiviert wird.

Selbstverständlich können im Rahmen des Informationsträgernutzungssystemes auch andere intelligente bzw. verknüpfte Regelungen vorgesehen sein, beispielsweise dahingehend, daß die jeweils als Individuum erkannte Person mittels mehrstufig an aufeinanderfolgend anzusteuernden Informationsträgern angezeigter Hinweise oder Botschaften entweder zu bestimmten Bereichen einer Anlage geführt oder aber zu Fundstellen von Zubehör oder dergl. geführt wird. Dies wird bei dem erfindungsgemäßen Informationsträgernnutzungssystem insbesondere dadurch ermöglicht, daß jede Person als Individuum erkannt wird und daher auch deren momentaner Standort jederzeit erkennbar ist, so daß die Person auch insoweit als Individuum behandelbar ist.

Innerhalb eines Informationsträgernutzungssystemes kann die Bereitstellung der einzelnen Anzeigen oder Werbebotschaften an den verschiedenen Informationsträgern im Einfachsten Falle vermittels einer drahtlosen Fernsteuerung oder per Kabel erfolgen. Bei einem derartigen dezentral organisierten Informationsträgernnutzungssystem ist jedem Informationsträger neben seiner Sender-/Empfängeranlage ein Kleinrechner sowie ein programmierbarer Speicher für eine Anzahl von unterschiedlichen temporär anzuzeigenden Anzeigen und wenigstens ein weiterer Speicher zum sammeln statistischer Daten zugeordnet.

Bei Informationsträgernutzungssystemen für größere Anlagen scheint jedoch eine zentrale Organisation mit einem Zentralrechner, welcher mit den einzelnen Informationsträgern zweckmäßigerweise über Leitungen verbunden ist und deren Versorgung mit bildlichen oder textlichen Anzeigen, insbesondere was die Versorgung bzw. den Austausch lediglich temporär einzusetzender Anzeigen betrifft, vorteilhafter, da hierdurch ein schneller Wechsel von Anzeigen oder Botschaften wesentlich erleichtert ist. Vor allem kann bei einem solcherart zentral organisierten Informationsträgernnutzungssystem der Zentralrechner die bezahlte Werbezeit für jeden einzelnen Informationsträger verwalten, derart daß eine Anzeige nur solange gezeigt bzw. angesteuert werden kann, als Werbezeit bezahlt ist. Ferner kann der Zentralrechner zur zentralen Erfassung und Verarbeitung aller irgendwie nutzbaren statistischen Daten, wie beispielsweise Ansteuerhäufigkeit der einzelnen Informationsträger, Abgrenzung einzelner Bereiche der Anlage, Auswahl der Anzeigen und evtl. in Verbindung mit Antennen im Bereich von Scannerkassen zwecks Zuordnung bestimmter Anzeigen zum Umsatz bestimmter Waren, herangezogen werden. Insbesondere kann beispielsweise erfaßt werden wieviele als Individuen erkannte Personen sich während der Laufzeit einer Anzeige in dem Erfassungsbereich der Sender-/Empfängeranlage eines Informationsträgers aufgehalten haben oder welche Zeitspanne einzelne Personen in einem bestimmten Bereich der Anlage verbracht haben.
In der nachfolgenden Beispielsbeschreibung ist ein in der Zeichnung schematisch dargestelltes, vereinfachtes Nutzungsbeispiel des Informationsträgernutzungssystemes beschrieben.
In der Zeichnung zeigt die
- Figur 1: eine schematische Darstellung des technischen Prinzips des Informationsträgernutzungssystemes;
- Figur 2: eine schematische Darstellung der Organisation einer wirtschaftlichen Nutzung Prinzips des Informationsträgernutzungssystemes.

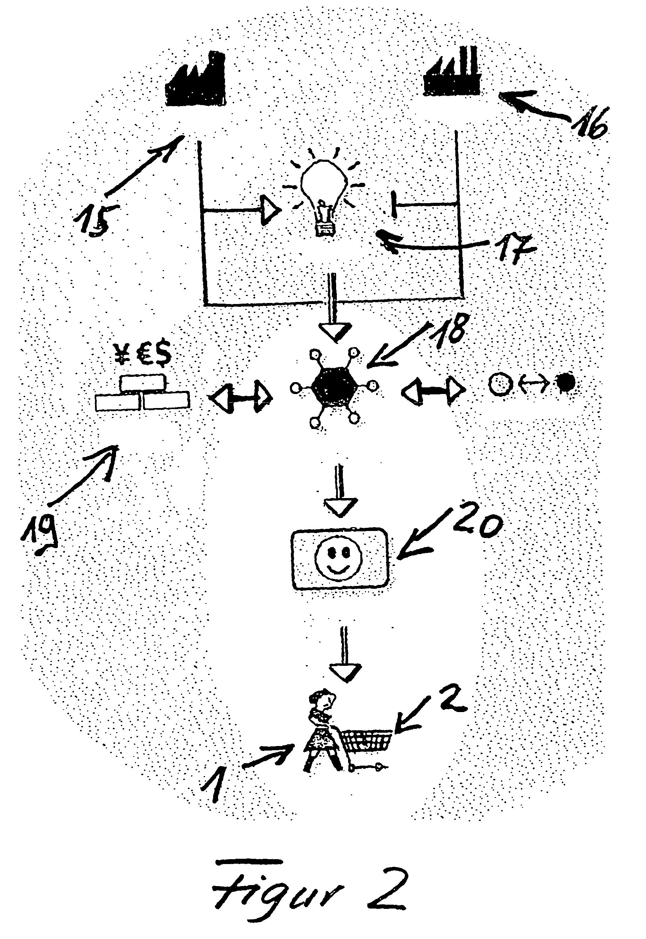

Gemäß der Darstellung in Figur 1 benutzt eine sich in einer mit einem erfindungsgemäßen Informationsträgernnutzungssystem ausgestatteten Anlage bewegende Person 1 einen Transportwagen 2, welcher mit einem abfragbaren Identitätssignal, hier eine Identitätsnummer 4 tragenden Transponder 3 ausgestattet ist. Über die Anlage hin verteilt sind Sender-/Empfängeranlagen 5 angeordnet, welche einen vorgegebenen Erfassungsbereich aufweisen und der Erkennung der als Signalgeber fungierenden Transponder 3 zugeordnet sind. Die Sender-/Empfängeranlage 5 übermittelt eine Information, z.B. Standort des Transponders bzw. der Person 1 oder Aufenthaltsdauer der Person 1 im Erfassungsbereich der Sender-/Empfängeranlage 5 an einen Controller 6 der seinerseits die Ausgabe einer Anzeige oder Botschaft über einen zugehörigen Informationsträger 7 auslöst, so daß der Person 1 die für ihren momentanen Standort wesentliche Information übermittelt wird. Zugleich speist der Controller 6 über einen Leitungsweg 8 alle aus der Erkennung des Transponders 3 ableitbaren und statistisch irgendwie nutzbaren Daten, beispielsweise Aufenthaltszeit, Aufenthaltsort, Anzahl der sonst noch im Erfassungsbereich der Sender-/Empfängeranlage befindlichen weiteren Transponder in einen Zentralrechner 9 ein, der seinerseits einen Informationspool für Interessenten, insbesondere Werbetreibende, Produkthersteller außer dem Anlagenbetreiber und dergl. mit aktuellen statistischen Daten versorgt. Andererseits können vermittels des Zentralrechners 9 von Werbefachleuten erzeugte Informationsdarstellungen, Texte oder Bilder, oder dergl. 11 über einen Leitungsweg 12 in den Zentralrechner 9 eingespeist und von diesem über einen weiteren Leitungsweg 13 an den Controller 6 und von diesem schließlich über einen weiteren Leitungsweg 14 an den Informationsträger 7 ausgegeben werden.

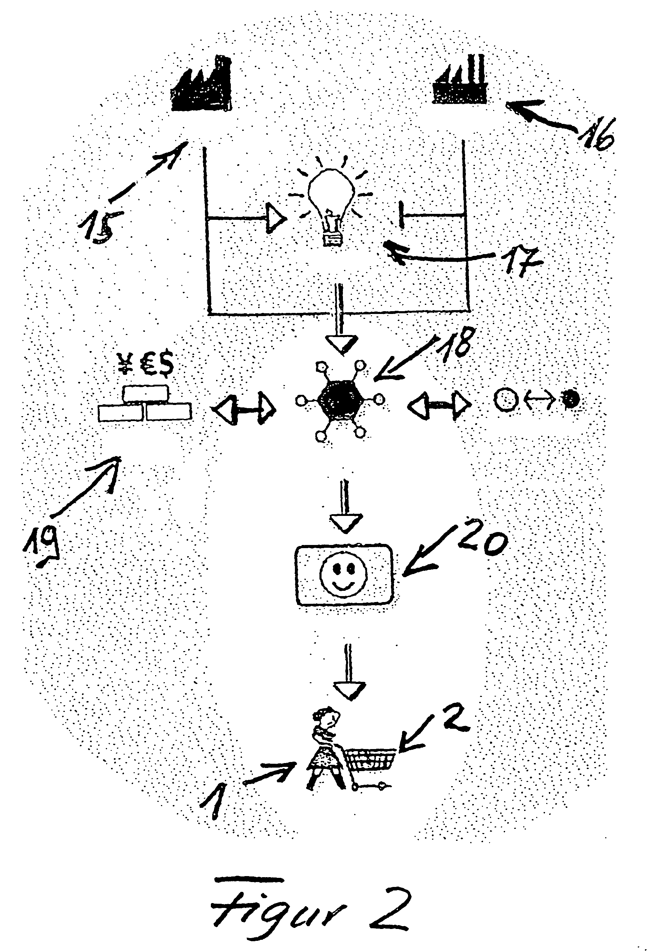

Gemäß der Darstellung in Figur 2 bedienen sich eine Vielzahl von Hauptlieferanten 15 , insbesondere Hersteller von Waren und Zulieferern 16, beispielsweise auch Dienstleister, eine Werbeunternehmens 17 einem Betreiber 18 des Zentralrechners 9 vorgefertigte Texte oder Bilder für Anzeigen oder Werbebotschaften zur Verfügung stellt. Gleichzeitig stellt ein erster Ausrüster 19 einer Anlage, beispielsweise eines Supermarktes 20, Transportmittel, beispielsweise mit Transpondern 3 ausgestattete Transportwagen 2 zur Verfügung, während ein zweiter Ausrüster die erforderlichen Informationsträger 7, Sender-/Empfängeranlagen 5, Rechner und dergl. zur Verfügung stellt.

In einer Gesamtsicht kann weiterhin vorgesehen sein, daß den einer mehr oder minder beliebigen Anzahl von Anlagen zugeordneten Zentralrechnern zumindest ein übergeordneter Verwaltungsrechner zugeordnet ist, mittels dessen beispielsweise die Kapazitätsauslastung der verschiedenen Informationsträger mit Werbeanzeigen optimierbar ist und mittels dessen auch eine übergeordnete Erfassung von statistischen Daten und dergl. Gesamtverwaltungsaufgaben, wie beispielsweise auch Verwaltung von Werbeaufträgen für einen verhältnismäßig großen Raum abwickelbar ist. Insbesondere kann vermittels des übergeordneten Verwaltungsrechners auch eine Auswahl dahingehend getroffen werden, in welchen Anlagen zu welcher Zeit welche Werbebotschaften vermittelt werden.

## Patentansprüche

1. System zur Nutzung von Informationsträgern in kommerziell genutzten Anlagen, beispielsweise Einkaufsmärkten, Freizeitanlagen und dergl., mit einer Vielzahl über untereinander verbundene Gänge erreichbaren Warendarbietungen und eventuell Restaurants oder dergl. Versorgungseinrichtungen sowie einer Anzahl mehr oder minder zentral angeordneter Bezahlkassen sowie einer Wegweisung durch Informationstafeln und ferner einer Ausstattung mit schriftliche, bildliche und/oder akustische Werbe- oder sonstige Botschaften vermittelnden Informationsträgern, wobei den Besuchern Transportwagen oder sonstige Transportmittel zur Beförderung ihrer Einkäufe und/oder sonstiger Gegenstände zumindest innerhalb der kommerziell genutzten Anlage
angeboten werden,
**dadurch gekennzeichnet,**
**daß** über die Grundfläche der kommerziell genutzten Anlage hin verteilt eine Vielzahl von Informationsträger angeordnet ist, welchen jeweils neben einer Ansteuerung zur Ausgabe einer Standartanzeige eine Einrichtung zur Ansteuerung zur Ausgabe wenigstens einer, vorzugsweise einer Anzahl unterschiedlicher Werbeanzeigen zugeordnet und wobei die Ansteuerung der Informationsträgern durch Signalgeber umschaltbar ist, welche jeweils ein für einen bestimmten Transportwagen charakteristisches Signal abgeben.

2. Informationsträgernnutzungssystem nach Anspruch 1, **dadurch gekennzeichnet, daß** den innerhalb der Grundfläche der kommerziell genutzten Anlage überhaupt vorhandenen ein-und ausschaltbaren bzw. ansteuerbaren Informationsträgern eine in Abhängigkeit von einer wählbaren Größe steuerbare Einschaltzeit zugeordnet ist.

3. Informationsträgernnutzungssystem nach Anspruch 1 und 2, **dadurch gekennzeichnet, daß** jede der ein-und ausschaltbaren, von einer Standartanzeige abweichenden Anzeigen eines Informationsträgers bezogen auf einen bestimmten Signalgeber lediglich einmal oder nach spezieller Vorgabe mehrmals bzw. in mehrfacher Zuordnung über diesen mobilen Signalgeber aktivierbar bzw. ansteuerbar ist.

4. Informationsträgernnutzungssystem nach Anspruch 1 bis 3, **dadurch gekennzeichnet, daß** im Bereich der hinter dem Ausgang oder vor dem Eingang jeder Anlage Sendeanlagen vorgesehen sind, welche die codierte Signale ausgebenden Mittel, insbesondere die abfragbaren Transponder zurücksetzen, so daß jeder Transponder beim Eintritt in die Anlage eine neue unverwechselbare eigene Identität repräsentiert.

5. Informationsträgernnutzungssystem nach Anspruch 1 bis 4, **dadurch gekennzeichnet, daß** an den in der kommerziell genutzten Anlage für die Besucher bereitgehaltenen Transportwagen codierte Signale ausgebende Mittel, insbesondere abfragbare Transponder, angeordnet sind, welche jeweils ein für exakt diesen Wagen charakteristisches Signal abgeben und vorzugsweise dem Ansteuern einer von einer Standartanzeige abweichenden Anzeige zugeordnet sind.

6. Informationsträgernnutzungssystem nach Anspruch 1 bis 5, **dadurch gekennzeichnet, daß** sämtliche Informationsträger zumindest mit einer zur Abfrage der codierten Daten der einzelnen Transponder geeigneten Einrichtung, insbesondere einer Sender-/Emfängeranlage, ausgestattet sind.

7. Informationsträgernnutzungssystem nach Anspruch 1 bis 6, **dadurch gekennzeichnet, daß** den Sender-/Empfängeranlagen jeweils wenigstens eine Zähleinrichtung zur Erfassung und Speicherung der Anzahl der Aktivierungssignale pro Zeiteinheit nachgeschaltet ist.

8. Informationsträgernnutzungssystem nach Anspruch 1 bis 7, **dadurch gekennzeichnet, daß** den Sender-/Empfängeranlagen zusätzlich zu einer Zähleinrichtung eine Zeittakteinrichtung nachgeschaltet ist, welche bei Erkennen eines statischen Aktivierungssignales für eine bestimmte Werbebotschaft deren Wiederholung auf vorgebbare Intervalle begrenzt.

9. Informationsträgernnutzungssystem nach Anspruch 1 bis 8, **dadurch gekennzeichnet, daß** die Informationsträger mit einer stehenden Werbebotschaft programmiert sind, welche selbsttätig einschaltet, falls kein Aktivierungssignal für eine auslösbare Werbebotschaft vorliegt.

10. Informationsträgernnutzungssystem nach Anspruch 1 bis 9, **dadurch gekennzeichnet, daß** jeder von einer Standartanzeige abweichenden Anzeige eines Informationsträgers eine begrenzte Einschaltzeit zugeordnet ist.

11. Informationsträgernnutzungssystem nach Anspruch 1 bis 10, **dadurch gekennzeichnet, daß** der Sender-/Empfängeranlage jedes Informationsträgers eine Einrichtung zugeordnet ist, welche verhindert, daß während einer der Laufzeit einer angesteuerten Anzeige diese durch weitere in den Sendebereich der Sender-/Empfängeranlage gelangende Signalgeber nochmals aktiviert wird.

12. Informationsträgernnutzungssystem nach Anspruch 1 bis 11, **dadurch gekennzeichnet, daß** die Bereitstellung der verschiedenen Werbebotschaften oder Anzeigen an den einzelnen Informationsträgern vermittels einer drahtlosen Fernsteuerung erfolgt

13. Informationsträgernnutzungssystem nach einem der Ansprüche 1 bis 12, **dadurch gekennzeichnet, daß** bei einem zentral organisierten Informationsträgernnutzungssystem der Versorgung der einzelnen Informationsträger mit Anzeigen, insbesondere temporären Anzeige, ein Zentralrechner zugeordnet ist.

14. Informationsträgernnutzungssystem nach einem der Ansprüche 1 bis 13, **dadurch gekennzeichnet, daß** bei einem zentral organisierten Informationsträgernnutzungssystem der Zentralrechner die bezahlte Werbezeit verwaltet, derart daß jede Anzeige nur solange gezeigt bzw. angesteuert werden kann, als Werbezeit bezahlt ist und daß alle statistischen Daten, wie Ansteuerhäufigkeit der einzelnen Informationsträger, Abgrenzung einzelner Bereiche der Anlage, Auswahl der Anzeigen und evtl. in Verbindung mit Antennen im Bereich von Scannerkassen Zuordnung der Anzeigen zum Umsatz bestimmter Waren, ebenfalls im Zentralrechner bearbeitet werden.

15. Informationsträgernnutzungssystem nach einem der Ansprüche 1 bis 12, **dadurch gekennzeichnet, daß** bei einem dezentral organisierten Informationsträgernnutzungssystem jedem Informationsträger neben seiner Sender-/Empfängeranlage ein Kleinrechner sowie ein programmierbarer Speicher für eine Anzahl von unterschiedlichen temporär anzuzeigenden Anzeigen und wenigstens ein weiterer Speicher zum sammeln statistischer Daten zugeordnet sind.

16. Informationsträgernnutzungssystem nach einem der Ansprüche 1 bis 15, **dadurch gekennzeichnet, daß** den einer mehr oder minder beliebigen Anzahl von Anlagen zugeordneten Zentralrechnern zumindest ein übergeordneter Verwaltungsrechner zugeordnet ist.

## Claims

1. A system for utilizing information carriers in commercially used facilities, for example, shopping centres, leisure facilities and the like, having a number of product outlets and possibly restaurants or similar food outlets that can be reached via interconnected walkways, and a number of more or less centrally arranged payment stations and a sign-posting system using information boards, and in addition the provision of information carriers communicating written, graphic and/or acoustic advertising or other messages, whereby the shoppers are offered trolleys or other transportation for carrying their shopping and/or other items at least within the commercially used facility, **characterised in that** a number of information carriers are arranged over the area of the commercially used facility, and the information carriers are allocated a device for activating at least one, preferably a number of different advertisements, in addition to a device for activating a standard advertisement, and whereby the activation of the information carriers can be switched by signal transmitters, each of which emit a signal that is characteristic for a specific trolley.

2. System for the utilization of information carriers according to claim 1, **characterised in that** a switch-on time which is activated in the presence of a preselected variable is assigned to the existing information carriers that can be switched on/off or activated inside the area of the commercially used facility.

3. System for the utilization of information carriers according to claim 1 and 2, **characterised in that** each of the displays of an information carrier that can be switched on and off and deviates from a standard display and is related to a specific signal transmitter can be simply activated or triggered once or according to a special precondition several times or in multiple arrangement by means of this mobile signal transmitter.

4. System for the utilization of information carriers according to claim 1 to 3, **characterised in that** transmitting systems are provided in the area behind the exit or in front of the entrance of each facility, which transmitting systems reset the means emitting the coded signals, in particular the interrogatable transponder, so that each transponder represents its own, new, discrete identity upon entering the facility.

5. System for the utilization of information carriers according to claim 1 to 4, **characterised in that** means emitting coded signals, in particular interrogatable transponders, are arranged on the trolleys provided for the shoppers in the commercially used facility, which means emit a signal that is characteristic exactly for said trolley, and is associated preferably with the activation of a display that is different from the standard display.

6. System for the utilization of information carriers according to claim 1 to 5, **characterised in that** all information carriers are equipped at least with a device suitable for querying the coded data of the individual transponders, in particular a transmitter/receiver system.

7. System for the utilization of information carriers according to claim 1 to 6, **characterised in that** at least one counting device for the acquisition and storage of the number of activation signals per unit of time is arranged downstream of the transmitter/receiver system.

8. System for the utilization of information carriers according to claim 1 to 7, **characterised in that** in addition to a counting device, a time cycle device is arranged downstream of the transmitter/receiver systems, which on identifying a static activating signal for a specific advertising message restricts its repetition to predetermined intervals.

9. System for the utilization of information carriers according to claim 1 to 8, **characterised in that** the information carriers are programmed with a standing advertising message, which switches on automatically if there is no activating signal for an activatable advertising message.

10. System for the utilization of information carriers according to claim 1 to 9, **characterised in that** each display of an information carrier differing from a standard display is allocated a limited switch-on time.

11. System for the utilization of information carriers according to claim 1 to 10,
**characterised in that** the transmitter/receiver system of each information carrier is allocated a device, which prevents during the running time of an activated display that the latter is reactivated by other signal transmitters entering the transmitting area of the transmitter/receiver system

12. System for the utilization of information carriers according to claim 1 to 11, **characterised in that** the supply of different advertising messages or displays to the individual information carriers is performed by means of a wireless remote control.

13. System for the utilization of information carriers according to one of claims 1 to 12, **characterised in that** with a centrally organised system for the utilization of information carriers a central computer is allocated for supplying the individual information carriers with displays, in particular temporary displays.

14. System for the utilization of information carriers according to one of claims 1 to 13, **characterised in that** with a centrally organised system for the utilization of information carriers the central computer administers the paid advertising time in such a fashion that each display can only be shown or activated for the time period paid for, and **in that** all statistical data, such as the activation frequency of the individual information carriers, the delimitation of the individual areas of the facility, the selection of the displays and in connection with aerials in the area of scanner payment stations the association of the displays with sales of specific goods, are likewise processed in the central computer.

15. System for the utilization of information carriers according to one of claims 1 to 12, **characterised in that** in the case of a decentrally organised system for the utilization of information carriers a mini-computer and a programmable memory for a number of different temporarily shown displays and at least one further memory for collecting statistical data are allocated to each of the information carriers, along with its transmitter/receiver system.

16. System for the utilization of information carriers according to one of claims 1 to 15, **characterised in that** at least one superordinate management computer is associated with the central computers associated with a more or less optional number of systems.

## Revendications

1. Système d'utilisation de supports d'informations pour des installations à fins commerciales, par exemple des centres commerciaux, des espaces de loisirs ou des installations similaires, comprenant de multiples emplacements offrant des marchandises, éventuellement des restaurants ou des installations d'approvisionnement similaires, qui sont reliés entre eux par des couloirs, ainsi qu'un nombre de caisses de payement disposées plus ou moins centralement et un dispositif indicateur du chemin constitué de multiples panneaux d'information, et, en outre, un équipement avec des supports d'informations transmettant des informations ou des messages publicitaires visuels, figuratifs et/ou sonores, étant observé que des chariots transporteurs ou d'autres moyens de transport sont mis à la disposition des visiteurs pour transporter les marchandises achetées ou d'autres objets au moins à l'intérieur de l'installations à fins commerciales, **caractérisé en ce que** sur toute la surface de l'installation à fins commerciales sont répartis de multiples supports d'informations qui sont associés à une commande pour la délivrance d'une annonce standard et qui sont en outre équipés d'une commande pour le délivrance d'au moins un, de préférence de plusieurs messages publicitaires différents, la commande des supports d'informations pouvant être modifiée par des générateurs de signaux qui émettent un signal caractéristique pour un chariot transporteur déterminé.

2. Système d'utilisation de supports d'informations selon la revendication 1 **caractérisé en ce que** aux supports d'informations répartis sur toute la surface de l'installation à fins commerciales, qui peuvent être mis en et hors fonctionnement, respectivement activés, est affectée une durée de fonctionnement commandée en dépendance d'une grandeur déterminable au choix.

3. Système d'utilisation de supports d'informations selon les revendications 1 et 2 caractéricé en ce que chacune des annonces pouvant être mise en ou hors fonctionnement, qui diffère de l'annonce standard du support d'informations en ce qui concerne un générateur de signaux déterminé, ne peut être activée, respectivement commandée qu'une seule fois ou, selon une directive spécifique, plusieurs fois, respectivement selon une attribution multiple par le générateur de signaux mobile.

4. Système d'utilisation de supports d'information selon les revendications 1 à 3 **caractérisé en ce que** dans la zone derrière la sortie ou devant l'entrée de chaque installation sont prévues des unités émettrices qui remettent en leur potion initiale les moyens émettant des signaux codés, en particulier des transpondeurs interrogeables, de sorte que chaque transpondeur soit doté lors de l'entrée dans l'installation d'une nouvelle identité propre ne pouvant être confondue avec une autre.

5. Système d'utilisation de supports d'informations selon l'une des revendications 1 à 4 **caractérisé en ce que** les chariots transporteurs mis à la disposition des visiteurs de l'intallation à fins commerciales sont équipés de moyens émettant des signaux codés, en particulier de transpondeurs interrogeables, qui émettent un signal spécifique à chaque chariot et sont associés de préférence à l'activation d'une annonce différente de l'annonce standard.

6. Système d'utilisation de supports d'informations selon les revendications 1 à 5 **caractérisé en ce que** tous les supports d'informations sont équipés d'au moins un dispositif approprié pour l'interrogation des données codées de chaque transpondeur, en particulier d'une unité émettrice/réceptrice.

7. Système d'utilisation de supports d'informations selon les revendications 1 à 6 **caractérisé en ce que** à la suite de chaque unité émettrice/réceptrice est disposé un compteur pour saisie et stocker les signaux d'activation par unité de temps.

8. Sytème d'utilisation de supports d'informations selon les revendications 1 à 7 **caractérisé en ce que** à la suite de chaque compteur disposé lui-même à la suite des unités émettrices/réceptrices est prévu un dispositif de cadencement qui, après reconnaissance d'un signal étatique d'activation d'une annonce publicitaire déterminée, limite la répétition de ladite annonce publicitaire à des intervalles déterminables à l'avance.

9. Système d'utilisation de supports d'informations selon les revendications 1 à 8 **caractérisé en ce que** les supports d'informations sont programmés avec une annonce publicitaire permanente qui se met automatiquement en fonctionnement en l'absence de signal d'activation d'une annonce publicitaire activable.

10. Système d'utilisation de supports d'informations selon les revendication 1 à 9 caractérisisé en ce que à chaque annonce publicitaire différente de l'annonce standard est affecté un temps de fonctionnement limité.

11. Système d'utilisation de supports d'informations selon les revendications 1 à 10 **caractérisé en ce que** à l'unité émettrice/réceptrice de chaque support d'informations est associé un dispositif qui empêche une annonce activée d'être activée une seconde fois pendant son temps de fonctionnement par d'autres émetteurs de signaux arrivant dans la zone d'émission de l'unité émettrice/rèceptrice.

12. Système d'utilisation de supports d'informations selon les revendications 1 à 11 **caractérisé en ce que** la mise à disposition de différentes annonces publicitaires ou message d'information par les supports d'informations individuels s'effectue au moyen d'une commande à distance sans fil.

13. Système d'utilisation de supports d'informations selon l'une des revendications 1 à 12 **caractérisé en ce que** dans un système d'utilisation de supports d'informations organisé de manière centrale, l'approvisionnement des supports d'informations individuels avec des annonces, en particulier des annonces temporaires, est associé à un ordinateur central.

14. Système d'utilisation de supports d'informations selon l'une des revendications 1 à 13 **caractérisé en ce que** dans un système d'utilisation de supports d'informations organisé de manière centrale, l'ordinateur central gère le temps de publicité payé de sorte que chaque annonce n'est montrée, respectivement activée, que pour le temps payé et que toutes les données statistiques, telles que la fréquence d'activation de chaque support d'informations individuel, la détermination des zones individuelles de l'installation, le choix des annonces et éventuellement l'attribution d'annonces à la commercialisation de produits déterminés en liaison avec des antennes dans la zone de caisses spécifiques, sont également traitées par l'ordinateur central.

15. Système d'utilisation de supports d'informations selon l'une des revendications 1 à 12 **caractérisé en ce que** dans un système d'utilisation de supports d'informations organisé de manière décentralisée, chaque support d'informations est équipé outre d'une unité émettrice/réceptrice, d'un mini-ordinateur ainsi que d'une mémoire pour un nombre d'annonces différentes à montrer temporairement et d'une autre mémoire pour recueilir les données statistiques.

16. Système d'utilisation de supports d'informations selon l'une des revendications 1 à 11 **caractérisé en ce que** l'ordinateur central associé à un nombre plus ou moins élevé d'installations coopère ave au moins un ordinateur de gestion supérieur.
